# FASCICULE DE BREVET EUROPEEN

(11) **EP 0 791 999 B1**
(45) Date de publication et mention de la délivrance du brevet: **08.10.2003**
(21) Numéro de dépôt: 97410017.4
(22) Date de dépôt: 10.02.1997
(51) Int. Cl.: H02H 1/06, G05F 1/618

(54) **Déclencheur électronique comportant un dispositif d'alimentation**
Elektronischer Auslöser mit Stromversorgung
Electronic trip device with a power supply

(30) Priorité: 22.02.1996 FR 9602429
(43) Date de publication de la demande: 27.08.1997
(73) Titulaire: Schneider Electric Industries SAS, 92500 Rueil-Malmaison (FR)
(72) Inventeur: Ferrazzi, Marc, 38050 Grenoble cedex 09 (FR)
(74) Mandataire: Jouvray, Marie-Andrée

(56) Documents cités:
- DE-A- 3 736 336
- GB-A- 2 073 975

## Description

L'invention concerne un déclencheur électronique pour disjoncteur comportant :
- au moins un capteur de courant fournissant un courant secondaire représentatif d'un courant parcourant un conducteur d'un réseau protégé par le disjoncteur,
- une unité de traitement recevant des signaux représentatifs de courants parcourant des conducteurs du réseau protégé par le disjoncteur, et fournissant un ordre de déclenchement,
- un premier circuit d'alimentation comportant une entrée connectée audit capteur de courant, une sortie connectée à une ligne d'alimentation alimentant des circuits électriques et électroniques du déclencheur, et des premiers moyens de régulation connectés entre l'entrée et la sortie dudit premier circuit d'alimentation, et
- un second circuit d'alimentation comportant une entrée connectée à une source externe d'énergie électrique et une sortie connectée à la ligne d'alimentation.

Les déclencheurs électroniques de types connus comportent des circuits d'alimentation pour fournir l'énergie électrique nécessaire au fonctionnement des circuits électroniques et de relais de déclenchement. Les circuits d'alimentation sont généralement connectés à des transformateurs de courant disposés sur des conducteurs de puissance du réseau à protéger. Les courants fournis par les transformateurs sont redressés puis appliqués à un circuit d'alimentation qui fournit des tensions continues aux différents circuits du déclencheur.

Les circuits d'alimentation comportent de manière connue, des régulateurs à découpage qui court-circuitent le courant secondaire des transformateurs lorsque la tension fournie dépasse un seuil prédéterminé. Le courant fourni par les transformateurs de courant est généralement suffisant pour permettre un fonctionnement normal du déclencheur.

Les déclencheurs peuvent comporter des circuits auxiliaires destinés à des fonctions connexes de la protection électrique, par exemple la mesure de la puissance électrique, le contrôle de charge, le contrôle d'isolement ou de courant de fuite.

Lorsque des circuits auxiliaires sont présents dans le déclencheur, il arrive que le courant fourni par les transformateurs ne soit plus suffisant pour alimenter tous les circuits.

La fonction principale des déclencheurs électroniques étant la protection des réseaux électriques, l'énergie électrique fournie par les transformateurs est en priorité réservée aux circuits effectuant cette protection. Dans certains déclencheurs connus, des dispositifs de gestion de l'alimentation inhibent le fonctionnement ou arrêtent l'alimentation de circuits auxiliaires lorsque le courant fourni par les transformateurs devient insuffisant.

Il est également connu d'utiliser un circuit d'alimentation supplémentaire pour palier l'insuffisance de courant fourni par les transformateurs. Le circuit d'alimentation est connecté à une source de tension externe au disjoncteur et assure l'alimentation du disjoncteur en permanence, même lorsque le courant des transformateurs est très faible ou nul.

Un tel dispositif selon l'art antérieur est connu du document GB-A-2073975 par exemple.

La source de tension externe appliquée aux circuits d'alimentation peut avoir des valeurs élevées. Elle correspond généralement à la tension du réseau à protéger, par exemple 100 à 700v. Or, la tension fournie par les circuits d'alimentation a une faible valeur de l'ordre de 10v à 20v et doit être de préférence isolée galvaniquement de la source externe. La puissance électrique dissipée par les circuits d'alimentation est alors généralement élevée et impose l'utilisation de composants électroniques de puissance volumineux.

Les circuits d'alimentation supplémentaires peuvent être facilement incorporés dans des disjoncteurs de très grandes dimensions. Pour des disjoncteurs de dimensions plus réduites, lesdits circuits sont habituellement installés dans des modules extérieurs aux disjoncteurs.

L'intégration de circuits d'alimentation supplémentaires est très difficile. L'espace disponible dans des disjoncteurs de dimensions moyennes ou petites est généralement très petit et la circulation de courants importants dans les contacts et les conducteurs principaux des disjoncteurs élèvent la température d'utilisation. Cette température élevée dans des disjoncteurs, conduirait à augmenter les dimensions des composants des circuits. Une augmentation du volume occupé par les composants serait alors incompatible avec le faible espace disponible dans les disjoncteurs.

L'invention a pour but un déclencheur électronique comportant un dispositif d'alimentation supplémentaire intégré.

Selon l'invention, le déclencheur comporte des seconds moyens de régulation comportant une entrée connectée à la sortie du second circuit d'alimentation, une sortie connectée à la ligne d'alimentation et des moyens de contrôle connectés aux premiers moyens de régulation à découpage, les moyens de contrôle contrôlant les seconds moyens de régulation pour réduire le courant moyen fourni par le second circuit d'alimentation lorsque le courant fourni par le capteur de courant augmente.

Dans un mode particulier de réalisation les seconds moyens de régulation comportent des moyens de limitation de courant connectés entre l'entrée et la sortie desdits moyens de régulation, lesdits moyens de limitation du courant étant contrôlés par les moyens de contrôle.

Selon un mode préférentiel de réalisation, les premiers moyens de régulation comportent un premier régulateur à découpage, les seconds moyens de régulation comportent un second régulateur à découpage, et les moyens de contrôle comportent des moyens de synchronisation connectés entre le premier et le second régulateurs à découpage.

Dans un développement du mode préférentiel de réalisation :
- le premier régulateur à découpage comporte des moyens de dérivation de courant connectés à l'entrée des premiers moyens de régulation et des premiers moyens de détection connectés entre la ligne d'alimentation et les moyens de dérivation, lesdits moyens de détection commandant la mise en court-circuit de l'entrée des premiers moyens de régulation lorsque la tension de la ligne d'alimentation dépasse un premier seuil prédéterminé, et
- le second régulateur à découpage comporte des moyens d'interruption de courant contrôlés par les moyens de contrôle, les moyens de contrôle commandant l'interruption du courant fourni par le second régulateur lorsque les premiers moyens de régulation commandent la mise en court-circuit de l'entrée des premiers moyens de régulation.

Dans un premier développement de l'invention, la sortie des seconds moyens de régulation est connectée à l'entrée des premiers moyens de régulation.

Dans un second développement de l'invention, la sortie des seconds moyens de régulation est connectée à la sortie des premiers moyens de régulation.

De préférence, le second circuit d'alimentation comporte un circuit de redressement connecté à la source externe d'énergie électrique, un limiteur de tension connecté à des sorties du circuit de redressement, et un hacheur connecté à des sorties du limiteur et fournissant une tension à une entrée des seconds moyens de régulation.

Le hacheur comporte un transformateur comportant un enroulement primaire alimenté par l'intermédiaire d'un oscillateur et un enroulement secondaire, isolé électriquement de l'enroulement primaire et connecté à l'entrée des seconds moyens de régulation.

Le hacheur est de préférence de type "flyback"

D'autres avantages ressortiront plus clairement de la description qui va suivre, de modes particuliers de réalisation de l'invention, donnés à titre d'exemples non limitatifs, et représentés aux dessins annexés sur lesquels :
La figure 1 représente le schéma d'un déclencheur connu associé à un disjoncteur,
La figure 2 représente le schéma d'un déclencheur selon un premier mode de réalisation de l'invention,
La figure 3 représente le schéma d'un déclencheur selon un second mode de réalisation de l'invention,
Les figures 4a à 4c montrent des signaux électriques représentatifs d'un mode de régulation dans un déclencheur selon les figures 2 ou 3.
La figure 5 représente un schéma détaillé d'un déclencheur selon la figure 3.

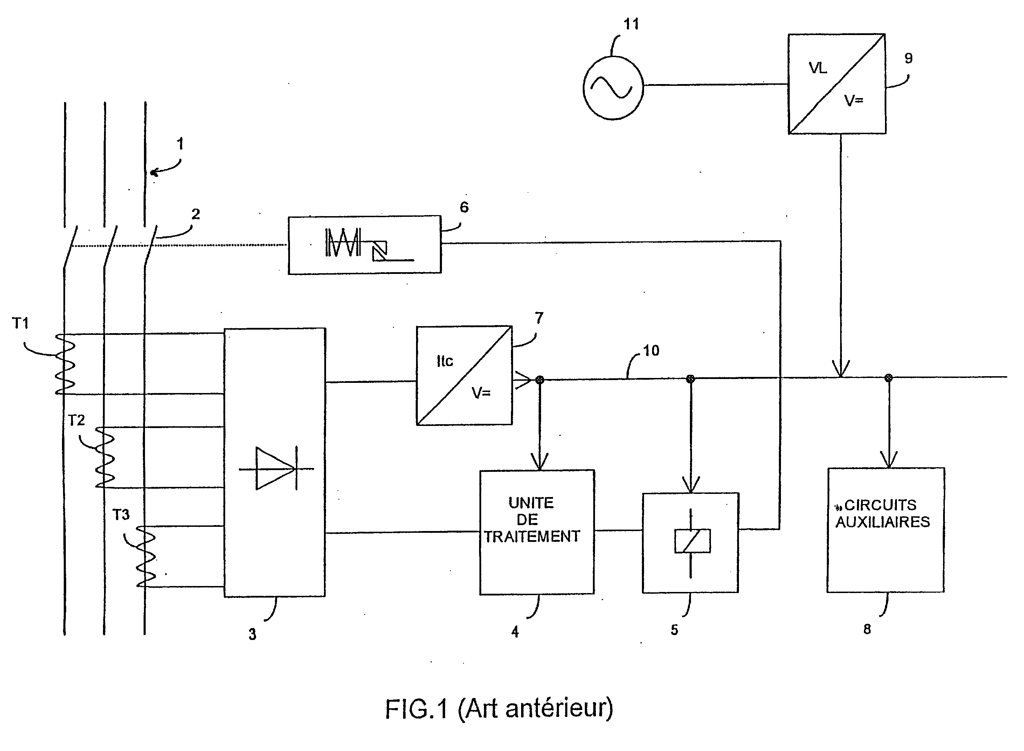

La figure 1 représente un disjoncteur de type connu. Un réseau électrique 1 à protéger est composé de conducteurs électriques connectés à des contacts 2 permettant d'établir ou d'interrompre le courant. Des capteurs de courant T1, T2, T3 associés aux différents conducteurs du réseau transforment les courants primaires de forte intensité en courants secondaires compatibles avec les déclencheurs électroniques. Les courants secondaires sont appliqués à l'entrée d'un circuit 3 de redressement et de détection. Ce circuit fournit des signaux représentatifs des courants à une unité électronique de traitement 4 et un courant d'alimentation à un premier circuit d'alimentation 7 du déclencheur. Un ordre de déclenchement produit par l'unité de traitement 4 est appliqué à l'entrée d'un relais de commande 5 qui actionne un mécanisme 6 d'ouverture des contacts 2 du disjoncteur. Le circuit d'alimentation 7 alimente, par l'intermédiaire d'une ligne d'alimentation 10, les circuits électriques et électroniques du déclencheur, notamment l'unité de traitement, le relais 5 et des circuits auxiliaires 8.

Un second circuit d'alimentation 9, connecté entre une source externe d'énergie électrique 11 et la ligne d'alimentation 10, alimente les circuits électriques et électroniques 4, 5 et 8 du déclencheur lorsque le courant fourni par les capteurs n'est plus suffisant.

Dans le schéma de la figure 1, le premier circuit d'alimentation 7 convertit le courant Itc fourni par les capteurs en une ou plusieurs tensions continues alimentant la ligne d'alimentation 10. Le second circuit d'alimentation 9 convertit une première tension VL continue ou alternative fournie par la source 11 en une seconde tension continue alimentant la ligne 10. La ligne d'alimentation est de préférence isolée galvaniquement de la source extérieure 11.

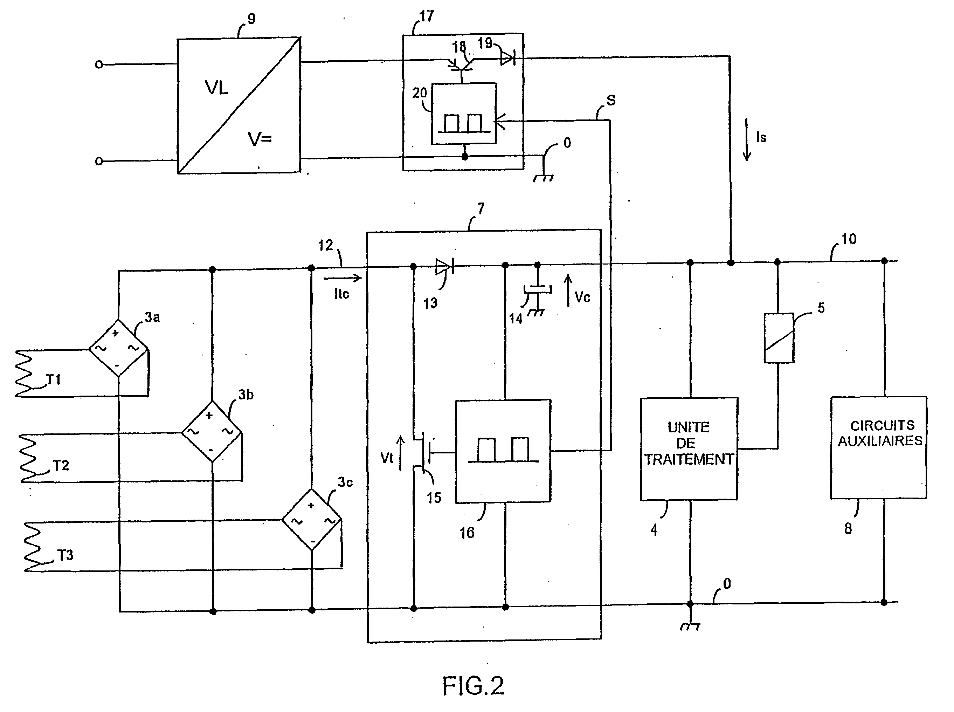

Dans le déclencheur électronique représenté par le schéma de la figure 2, les transformateurs de courant T1, T2 et T3 sont connectés à des entrées alternatives de trois ponts redresseurs, respectivement 3a, 3b et 3c. Les sorties positives des ponts redresseurs sont connectées à une ligne 12 et les sorties négatives desdits ponts sont reliées à une ligne de référence 0. La ligne 12 relie les sorties positives des ponts à une entrée du premier circuit d'alimentation 7. Les courants secondaires générés par les transformateurs de courant sont redressés par les ponts 3a, 3b, et 3c, puis fournis à l'entrée du premier circuit d'alimentation 7.

De manière connue, le premier circuit d'alimentation 7 comporte une diode 13 connectée entre une entrée reliée à la ligne 12 et une sortie reliée à la ligne d'alimentation 10, un condensateur 14 connecté entre la sortie et la ligne de référence 0, un transistor 15 connecté entre l'entrée et la ligne de référence 0, et un premier régulateur à découpage 16 connecté entre la ligne d'alimentation 10 et la ligne de référence 0 et comportant une sortie connectée à une électrode de commande du transistor 15.

Le courant fourni par les transformateurs T1, T2 ou T3 est redressé par les ponts 3a, 3b ou 3c. Ensuite, tant que le transistor 15 est bloqué, ledit courant traverse la diode 13, charge le condensateur 14 et alimente les circuits connectés à la ligne 10. Lorsque la tension entre la ligne 10 et la ligne de référence 0, c'est à dire la tension Vc aux bornes du condensateur 14, dépasse un seuil de tension prédéterminé, le régulateur à découpage 16 commande la conduction du transistor 15. Le courant des transformateurs est alors dérivé vers la ligne de référence 0 et ne circule plus par la ligne d'alimentation 10. La diode 13 bloque la décharge du condensateur vers le transistor 15.

Le régulateur à découpage 16 commande la conduction et le blocage du transistor 15 en fonction de la tension présente sur la ligne d'alimentation 10. La fréquence et le rapport cyclique de découpage varient en fonction du courant des transformateurs et du courant absorbé par les circuits connectés à la ligne 10. Si le courant des transformateurs augmente, le temps moyen pendant lequel le transistor 15 est conducteur augmente et la durée de blocage dudit transistor diminue, le courant de charge du condensateur étant plus élevée.

Selon un premier mode de réalisation de l'invention, le déclencheur de la figure 2 comporte un circuit 17 de régulation de courant connecté entre le second circuit d'alimentation 9 et la ligne d'alimentation 10. Le circuit 17 comporte une entrée recevant une tension continue ou redressée fournie par le circuit d'alimentation 9 et une sortie fournissant un courant régulé à la ligne 10. La régulation du courant du circuit 17 est telle qu'elle diminue la valeur moyenne du courant fourni par le circuit 17 à la ligne 10 lorsque le courant secondaire des transformateurs T1, T2 ou T3 augmente.

Le circuit 17 de régulation comporte un transistor 18 et une diode 19 connectés en série entre son entrée et sa sortie, et un dispositif de contrôle 20 connecté à la base du transistor 18 pour le contrôle de la fourniture du courant à la ligne 10. Le dispositif 20 commande le transistor 18 en découpage. Il comporte une entrée connectée par une ligne S de synchronisation au régulateur 16 à découpage.

Dans ce mode de réalisation de l'invention, le dispositif de commande est synchronisé avec le régulateur à découpage 16. Lorsque le régulateur détecte une augmentation de tension de la ligne, il commande la conduction du transistor 15 pour dériver le courant d'entrée du circuit d'alimentation 7 et envoie un signal au dispositif 20 pour bloquer le courant de sortie du circuit de régulation 17.

Le courant fourni par le circuit de régulation 17 est synchronisé avec la charge du condensateur 14. Lorsque le transistor 15 est bloqué, le courant des transformateurs et le courant du circuit 17 s'ajoutent pour charger le condensateur 14 et augmenter la tension de la ligne 10. Pendant la décharge du condensateur, le courant des transformateurs est dérivé vers la ligne 0 et le courant fourni par les circuits 9 et 17 est nul.

Le temps pendant lequel le condensateur 14 se charge dépend de la valeur du courant fourni par les transformateurs de courant et de la valeur du courant fourni par le circuit 17. La valeur moyenne du courant fourni par le circuit 17 dépend du rapport cyclique correspondant au temps de charge et de décharge du condensateur 17. Le circuit 17 fournit du courant à la ligne 10 uniquement pendant la charge du condensateur. Lorsque le courant fourni par les transformateurs augmente, le temps de charge du condensateur est réduit et le courant moyen fourni par le circuit 17 diminue.

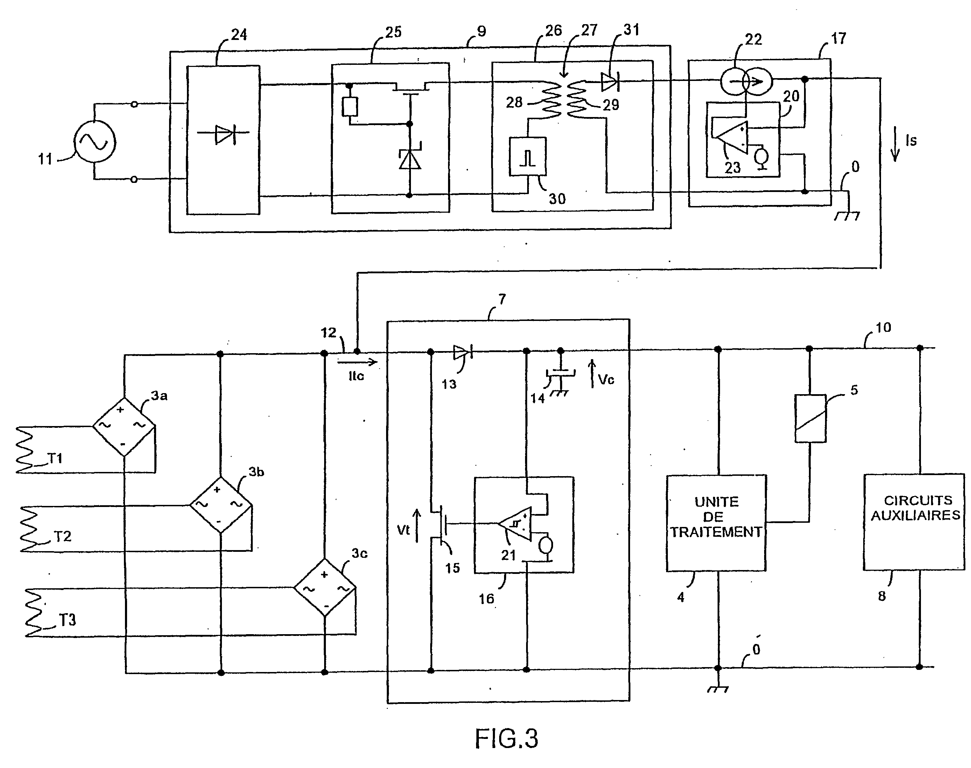

Le schéma de la figure 3 montre un autre mode de réalisation d'un déclencheur selon l'invention. La sortie du circuit de régulation 17 est connectée à l'entrée du premier circuit d'alimentation 7. Le régulateur 16 comporte un premier comparateur 21 à hystérésis pour comparer la tension de la ligne 10 à une tension de référence et commander le transistor 15. Le circuit 17 comporte un limiteur de courant commandé 22 connecté entre l'entrée et la sortie du circuit 17.

Le circuit 20 de commande comporte un second comparateur 23 ayant une première entrée connectée à la sortie du circuit 17, une seconde entrée connectée à une tension de référence et une sortie connectée au limiteur de courant 22 pour contrôler le courant de sortie du circuit 17.

La synchronisation du circuit de commande 20 avec le régulateur à découpage 16 se fait par l'intermédiaire de la liaison entre la sortie du circuit 17 et l'entrée du circuit 7. Lorsque le condensateur doit être chargé, le comparateur 21 commande le blocage du transistor 15. Le courant des transformateurs T1, T2 ou T3 est alors dirigé vers le condensateur 14 et la ligne 10. Le comparateur 23 du circuit 20 détecte une tension Vt élevée sur la sortie du circuit 17 (tension aux bornes du transistor 15 qui est bloqué) et commande la fourniture d'un courant par le circuit 17 à l'entrée du circuit 7. Le courant fourni par le circuit 17 s'ajoute au courant des transformateurs de courant.

Dès que la tension Vc aux bornes du condensateur 14, c'est à dire la tension de la ligne 10, atteint un seuil prédéterminé, le comparateur 21 commande la conduction du transistor 15 pour dériver le courant d'entrée du circuit 7. Le court-circuit réalisé par le transistor 15 fait chuter la tension Vt à l'entrée du circuit 7 et à la sortie du circuit 17. Le comparateur 23 détecte cette tension basse due au court-circuit et bloque le limiteur de courant 22 pour interrompre la fourniture de courant à l'entrée du circuit 7.

Comme dans le premier mode de réalisation, le circuit 17 fournit du courant à la ligne 10 uniquement pendant la charge du condensateur. Le courant traverse, dans ce cas, le premier circuit 7 d'alimentation.

Sur le schéma de la figure 3, un mode particulier de réalisation du second circuit d'alimentation 9 comporte un circuit de redressement 24 connecté à la source extérieure 11, un limiteur de tension 25 connecté à des sorties du circuit de redressement, et un hacheur 26 connecté à des sorties du limiteur 25 et fournissant une tension à l'entrée du circuit 17.

Le redresseur 24 comporte des entrées connectées à la source extérieure 11 et des sorties fournissant une tension continue ou polarisée. La source 11 peut être continue ou alternative, monophasée ou triphasée. Le circuit 25 limite la valeur maximale de la tension continue appliquée aux entrées du hacheur 26.

Le hacheur 26 comporte un transformateur 27 ayant un enroulement primaire 28 et un enroulement secondaire 29. L'enroulement primaire est connecté aux entrées du hacheur et alimenté à travers un oscillateur électronique 30. L'enroulement secondaire est connecté au circuit 17 à travers une diode 31 de redressement. Le transformateur 27 isole galvaniquement la source 11 par rapport au déclencheur.

Le fonctionnement du hacheur est de préférence de type "Flyback".

Sur les figures 4a à 4c sont représentés des signaux représentatifs de l'alimentation d'un déclencheur selon l'invention. La figure 4a montre le courant Itc fourni par les transformateurs de courants. Entre des instants t0 et t1, le courant est nul. Entre l'instant t1 et un instant t2, le courant a une faible amplitude et entre l'instant t2 et un instant t3, le courant a une forte amplitude.

La figure 4b montre l'état du transistor 15 et la tension correspondante à ses bornes Vt. L'état 1 signifie que le transistor 15 est bloqué et que la tension Vt est élevée, sensiblement égale à la tension de la ligne 10. L'état 0 signifie que le transistor est saturé et que sa tension Vt est très basse, proche de 0 Volt.

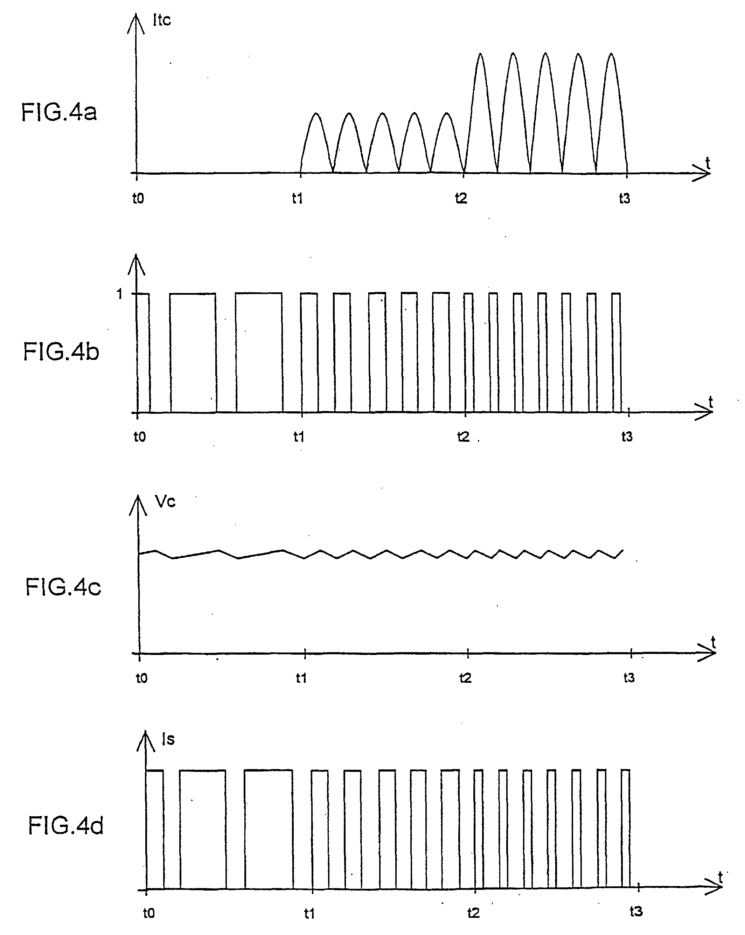

La figure 4c montre le signal Vc représentatif de la tension de la ligne 10, ou tension aux bornes du condensateur 14. Les variations de la tension Vc représentent la charge et la décharge du condensateur 14.

La figure 4d montre le courant Is fourni par le circuit 17 de régulation.

Entre les instants t0 et t1, le courant Itc est nul, le déclencheur est alimenté par le seul courant fourni par le circuit 17. Le temps de charge du condensateur est long et, dans chaque cycle de charge/décharge du condensateur, la durée de fourniture du courant Is est supérieure à la durée de blocage dudit courant Is. Dans le mode de réalisation représenté à l'instant t0, le condensateur 14 est déjà chargé à une tension proche de la tension de seuil commandant le conducteur du transistor 15, l'alimentation externe étant déjà en fonctionnement.

Entre les instants t1 et t2, le courant Itc est faible, le déclencheur est alimenté par le courant Is et le courant Itc. La durée de fourniture du courant Is, par cycle, est plus faible qu'entre les instants t0 et t2. Le courant moyen fourni par le circuit 17 à la ligne 10 diminue donc.

Entre les instants t2 et t3, le courant Itc est élevé, le temps de charge est réduit et la durée de fourniture du courant Is, par cycle, inférieure à la durée de blocage dudit courant Is est plus courte qu'entre t1 et t2. Le courant moyen fourni par le circuit 17 à la ligne 10 diminue encore.

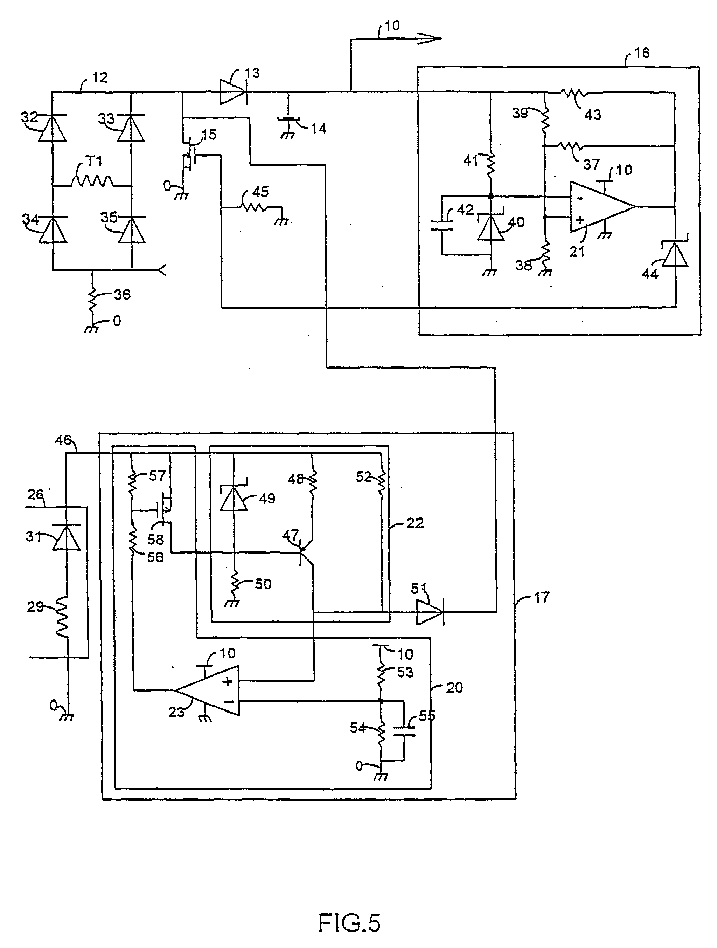

La figure 5 montre un schéma détaillé d'un mode de réalisation particulier de l'alimentation d'un déclencheur selon la figure 3. Sur ce schéma, seul le transformateur T1 est représenté. Le redresseur 3a est représenté par quatre diodes 32, 33, 34 et 35 branchées en redresseur double alternance. Les cathodes des diodes 32 et 33 alimentent en courant positif la ligne 12 connectée au transistor 15 et à la diode 13. Les anodes des diodes 34 et 35 reçoivent le retour de courant à travers une résistance 36 de mesure et la ligne de référence 0.

Le circuit de régulation 16 comporte le comparateur 21 fonctionnant selon un cycle d'hystérésis. Des résistances 37, 38 et 39 connectées entre l'entrée non-inverseuse et respectivement la sortie du comparateur, la ligne 0 et la ligne 10, déterminant ainsi le seuil et la fenêtre de l'hystérésis. Une diode zener 40 connectée entre l'entrée inverseuse et la ligne 0 fixe une tension de référence du comparateur. La polarisation de la diode 40 est assuré par une résistance 41 connectée entre la ligne 10 et la cathode de ladite diode. Un condensateur 42 connecté en parallèle sur la diode 40 améliore le fonctionnement à la mise sous tension. La sortie du comparateur est polarisée par une résistance 43 reliant la sortie dudit comparateur à la ligne 10. Une diode zener connectée entre la sortie du comparateur 21 et la grille du transistor 15 limite la tension de commande du transistor. La polarisation de la grille du transistor 15 et de la diode zener 44 est assurée par une résistance 45 reliant la grille du transistor 15 à la ligne 0.

Le hacheur 26 dont seule une partie est représentée à la figure 5, fournit une tension polarisée. Cette tension est continue ou, plus généralement, sous la forme d'impulsions. La tension du hacheur est appliquée au limiteur de courant 22 par une ligne 46. Le limiteur 22 comporte un transistor 47 ayant un émetteur relié à la ligne 46 à travers une résistance 48. La tension de base du transistor 47 est déterminée par une diode zener 49 connectée entre ladite base et la ligne 46, et par une résistance 50 de polarisation connectée entre l'anode de la diode 49 et la ligne 0. La valeur du courant limité est donnée par : (V2 - Vbe)/R, où V2 est la tension de la diode zener 49, Vbe est la tension base émetteur du transistor 47 et R la valeur de la résistance 48.

La sortie du limiteur de courant se fait sur le collecteur du transistor 47. Le courant limité traverse une diode 51 puis s'ajoute au courant des transformateurs sur la ligne 12. Une résistance 52 connectée entre le collecteur du transistor 47 et la ligne 46 permet d'amorcer et de faciliter la régulation de la tension de la ligne 10 lorsque le courant d'alimentation est fourni exclusivement par le circuit 17.

Le circuit de commande 20 comporte le comparateur 23 et un transistor 58 de commande. L'entrée inverseuse du comparateur est connectée à un point commun d'un pont diviseur résistif formé par deux résistances 53 et 54. La résistance 53 est connectée entre le point commun et la ligne 10, et la résistance 54 est connectée entre la ligne 0 et le point commun. Un condensateur 55 est connecté aux bornes de la résistance 54 pour filtrer la tension du pont diviseur. Le pont diviseur résistif 53, 54 fournit une tension de référence à l'entrée inverseuse du comparateur 23. L'entrée non inverseuse du comparateur 23 est connectée à la sortie du limiteur 22, c'est à dire au collecteur du transistor 47.

La sortie du comparateur 23 est connectée à la grille de commande du transistor 58 par l'intermédiaire d'une résistance 56. Une résistance 57 de polarisation est connectée entre la grille et la source du transistor 52.

Lorsque le transistor 15 est bloqué, la tension de la ligne 12 est à une valeur élevée, l'entrée non inverseuse du comparateur 23 à une tension supérieure à la tension de référence appliquée à son entrée inverseuse et le comparateur 23 ne commande pas la conduction du transistor 58. Le limiteur de courant 22 fournit alors un courant qui s'ajoute au courant du transformateur T1.

Si la tension de la ligne 12 augmente, le comparateur 21 commande la conduction du transistor 15. La tension de l'entrée non-inverseuse du comparateur 23 devient inférieure à la tension de référence appliquée à son entrée inverseuse. La sortie du comparateur 23 commande alors la conduction du transistor 58 qui court-circuite la diode zener 49. Le transistor 47 est alors bloqué et le limiteur de courant ne fournit plus qu'un très faible courant traversant la résistance 52.

Le déclencheur selon l'invention comporte généralement des transformateurs de courant à circuits magnétiques qui fournissent à la fois des signaux de mesure du courant et l'énergie électrique d'alimentation. Dans d'autres modes de réalisation, un déclencheur selon l'invention peut comporter des transformateurs à air, de type tore de Rogowski, pour la mesure du courant et des transformateurs à circuit magnétique pour l'alimentation en énergie électrique.

Dans les modes de réalisation décrits ci-dessus, une seule ligne d'alimentation 10 alimente les circuits du déclencheur. Mais il est possible de réaliser des déclencheurs selon l'invention comportant plusieurs lignes d'alimentation destinées à divers circuits et ayant des tensions différentes.

## Revendications

1. Déclencheur électronique pour disjoncteur comportant :
- au moins un capteur de courant (T1, T2, T3) fournissant un courant secondaire représentatif d'un courant parcourant un conducteur d'un réseau (1) protégé par le disjoncteur,
- une unité de traitement (4) recevant des signaux représentatifs de courants parcourant des conducteurs du réseau (1) protégé par le disjoncteur, et fournissant un ordre de déclenchement,
- un premier circuit d'alimentation (7) comportant une entrée connectée audit capteur de courant, une sortie connectée à une ligne d'alimentation (10) alimentant des circuits (4, 5, 8) électriques et électroniques du déclencheur, et des premiers moyens (15, 16) de régulation connectés entre l'entrée et la sortie dudit premier circuit d'alimentation, et
- un second circuit d'alimentation (9) comportant une entrée connectée à une source externe (11) d'énergie électrique et une sortie connectée à la ligne (10) d'alimentation,
déclencheur **caractérisé en ce qu'**il comporte des seconds moyens (17) de régulation comportant une entrée connectée à la sortie du second circuit (9) d'alimentation, une sortie connectée à la ligne (10) d'alimentation et des moyens (20) de contrôle connectés aux premiers moyens (15, 16) de régulation à découpage, les moyens (20) de contrôle contrôlant les seconds moyens (17) de régulation pour réduire le courant moyen fourni par le second circuit d'alimentation lorsque le courant fourni par le capteur de courant augmente.

2. Déclencheur selon la revendication 1, **caractérisé en ce que** les seconds moyens (17) de régulation comportent des moyens (18, 22, 47, 48, 49) de limitation de courant connectés entre l'entrée et la sortie desdits moyens de régulation, lesdits moyens de limitation du courant étant contrôlés par les moyens (20) de contrôle.

3. Déclencheur selon l'une des revendications 1 et 2, **caractérisé en ce que** les premiers moyens (15, 16) de régulation comportent un premier régulateur (15, 16, 21, 37-44) à découpage, les seconds moyens (17) de régulation comportent un second régulateur (18, 20, 22, 58, 56, 57) à découpage, et les moyens (20) de contrôle comportent des moyens (5, 23, 53-55) de synchronisation connectés entre le premier et le second régulateurs à découpage.

4. Déclencheur selon la revendication 3, **caractérisé en ce que** :
- le premier régulateur (15, 16, 21, 37-44) à découpage comporte des moyens (15) de dérivation de courant connectés à l'entrée des premiers moyens de régulation et des premiers moyens de détection connectés entre la ligne d'alimentation et les moyens de dérivation, lesdits moyens de détection commandant la mise en court-circuit de l'entrée des premiers moyens de régulation lorsque la tension de la ligne d'alimentation dépasse un premier seuil prédéterminé, et
- le second régulateur à découpage comporte des moyens d'interruption de courant (18, 22, 47, 58) contrôlés par les moyens (20) de contrôle, les moyens de contrôle commandant l'interruption du courant fourni par le second régulateur lorsque les premiers moyens de régulation commandent la mise en court-circuit de l'entrée des premiers moyens de régulation.

5. Déclencheur selon l'une quelconque des revendications 1 à 4, **caractérisé en ce que** la sortie des seconds moyens (17) de régulation est connectée à l'entrée des premiers moyens (16) de régulation.

6. Déclencheur selon l'une quelconque des revendications 1 à 4, **caractérisé en ce que** la sortie des seconds moyens (17) de régulation est connectée à la sortie des premiers moyens (16) de régulation.

7. Déclencheur selon l'une quelconque des revendications 1 à 6, **caractérisé en ce que** le second circuit (9) d'alimentation comporte un circuit de redressement 24 connecté à la source externe (11) d'énergie électrique, un limiteur de tension (25) connecté à des sorties du circuit de redressement, et un hacheur (26) connecté à des sorties du limiteur (25) et fournissant une tension à une entrée des seconds moyens (17) de régulation.

8. Déclencheur selon la revendication 7, **caractérisé en ce que** le hacheur (26) comporte un transformateur (27) comportant un enroulement primaire (28) alimenté par l'intermédiaire d'un oscillateur (30) et un enroulement secondaire (29), isolé électriquement de l'enroulement primaire et connecté à l'entrée des seconds moyens (17) de régulation.

9. Déclencheur selon la revendication 8, **caractérisé en ce que** le hacheur (26) est de type flyback.

## Patentansprüche

1. Elektronischer Auslöser für einen Leistungsschalter, der
- mindestens einen Stromwandler (T1, T2, T3), welcher einen Sekundärstrom liefert, der einen über einen Leiter eines durch den Leistungsschalter geschützten Netzes (1) fließenden Strom abbildet,
- eine Verarbeitungseinheit (4), die mit Signalen beaufschlagt wird, welche über Leiter des durch den Leistungsschalter geschützten Netzes (1) fließende Ströme abbilden, und die einen Auslösebefehl aussendet,
- eine erste Stromversorgungsschaltung (7) mit einem, an den genannten Stromwandler angeschlossenen Eingang, einem mit einer Stromversorgungsleitung (10) zur Einspeisung der elektrischen und elektronischen Stromkreise (4, 5, 8) des Auslösers verbundenen Ausgang sowie zwischen den Eingang und den Ausgang der genannten ersten Stromversorgungsschaltung geschalteten ersten Regelmitteln (15, 16) sowie
- eine zweite Stromversorgungsschaltung (9) mit einem, an einen externe elektrische Energiequelle (11) angeschlossenen Eingang und einem an die Stromversorgungsleitung (10) angeschlossenen Ausgang umfaßt,
welcher Auslöser **dadurch gekennzeichnet ist, daß** er zweite Regelmittel (17) mit einem, an den Ausgang der zweiten Stromversorgungsschaltung (9) angeschlossenen Eingang, einem an die Stromversorgungsleitung (10) angeschlossenen Ausgang sowie an die ersten Schalt-Regelmittel (15, 16) angeschlossenen Steuermitteln (20) umfaßt, welche Steuermittel (20) die zweiten Regelmittel (17) ansteuern, um den Mittelwert des von der zweiten Stromversorgungsschaltung gelieferten Stroms abzusenken, wenn der vom Stromwandler gelieferte Strom ansteigt.

2. Auslöser nach Anspruch 1, **dadurch gekennzeichnet, daß** die zweiten Regelmittel (17) zwischen den Eingang und den Ausgang der genannten Regelmittel geschaltete Strombegrenzungsmittel (18, 22, 47, 48, 49) umfassen, welche genannten Strombegrenzungsmittel durch die Steuermittel (20) angesteuert werden.

3. Auslöser nach einem der Ansprüche 1 und 2, **dadurch gekennzeichnet, daß** die ersten Regelmittel (15, 16) einen ersten Schaltregler (15, 16, 21, 37-44) umfassen, die zweiten Regelmittel (17) einen zweiten Schaltregler ((18, 20, 22, 58, 56, 57) umfassen und die Steuermittel (20) Synchronisiermittel (5, 23, 53-55) umfassen, die zwischen den ersten und den zweiten Schaltregler geschaltet sind.

4. Auslöser nach Anspruch 3, **dadurch gekennzeichnet, daß**
- der erste Schaltregler (15, 16, 21, 37-44) in den Eingang der ersten Regelmittel geschaltete Stromumleitmittel (15) sowie zwischen die Stromversorgungsleitung und die Umleitmittel geschaltete erste Erfassungsmittel umfaßt, welche genannten Erfassungsmittel das Kurzschließen des Eingangs der ersten Regelmittel steuern, wenn die Spannung an der Stromversorgungsleitung einen ersten festgelegten Schwellwert übersteigt,
- der zweite Schaltregler durch die Steuermittel (20) angesteuerte Stromunterbrechungsmittel (18, 22, 47, 58) umfaßt, wobei die Steuermittel die Unterbrechung des vom zweiten Regler gelieferten Stroms veranlassen, wenn durch die ersten Regelmittel der Eingang der ersten Regelmittel kurzgeschlossen wird.

5. Auslöser nach irgendeinem der Ansprüche 1 bis 4, **dadurch gekennzeichnet, daß** der Ausgang der zweiten Regelmittel (17) mit dem Eingang der ersten Regelmittel (16) verbunden ist.

6. Auslöser nach irgendeinem der Ansprüche 1 bis 4, **dadurch gekennzeichnet, daß** der Ausgang der zweiten Regelmittel (17) mit dem Ausgang der ersten Regelmittel (16) verbunden ist.

7. Auslöser nach irgendeinem der Ansprüche 1 bis 6, **dadurch gekennzeichnet, daß** die zweite Stromversorgungsschaltung (9) eine mit der externen elektrischen Energiequelle (11) verbundene Gleichrichtungsschaltung (24), einen an Ausgänge der Gleichrichtungsschaltung angeschlossenen Spannungsbegrenzer (25) sowie einen Zerhacker (26) umfaßt, der an Ausgänge des Begrenzers (25) angeschlossen ist und eine Spannung an einen Eingang der zweiten Regelmittel (17) liefert.

8. Auslöser nach Anspruch 7, **dadurch gekennzeichnet, daß** der Zerhacker (26) einen Transformator (27) mit einer, über einen Oszillator (30) gespeisten Primärwicklung (28) sowie einer Sekundärwicklung (29) umfaßt, die von der Primärwicklung galvanisch getrennt und mit dem Eingang der zweiten Regelmittel (17) verbunden ist.

9. Auslöser nach Anspruch 8, **dadurch gekennzeichnet, daß** der Zerhacker (26) als Flybackschaltung ausgebildet ist.

## Claims

1. An electronic trip device for a circuit breaker comprising:
- at least one current sensor (T1, T2, T3) supplying a secondary current representative of a current flowing in a conductor of a power system (1) protected by the circuit breaker,
- a processing unit (4) receiving signals representative of currents flowing in conductors of the power system (1) protected by the circuit breaker, and supplying a tripping order,
- a first power supply circuit (7) comprising an input connected to said current sensor, an output connected to a power supply line (10) supplying electrical and electronic circuitry (4, 5, 8) of the trip device, and first regulating means (15, 16) connected between the input and the output of said first power supply circuit, and
- a second power supply circuit (9) comprising an input connected to an external electrical power source (11) and an output connected to the power supply line (10),
trip device **characterized in that** it comprises second regulating means (17) comprising an input connected to the output of the second power supply circuit (9), an output connected to the power supply line (10) and control means (20) connected to the first chopping regulating means (15, 16), the control means (20) controlling the second regulating means (17) to reduce the mean current supplied by the second power supply circuit when the current supplied by the current sensor increases.

2. The trip device according to claim 1, **characterized in that** the second regulating means (17) comprise current limiting means (18, 22, 47, 48, 49) connected between the input and output of said regulating means, said current limiting means being controlled by the control means (20).

3. The trip device according to one of the claims 1 and 2, **characterized in that** the first regulating means (15, 16) comprise a first chopping regulator (15, 16, 21, 37-44), the second regulating means (17) comprise a second chopping regulator (18, 20, 22, 58, 56, 57), and the control means (20) comprise synchronization means (5, 23, 53-55) connected between the first and second chopping regulators.

4. The trip device according to claim 3, **characterized in that**:
- the first chopping regulator (15, 16, 21, 37-44) comprises current diverting means (15) connected to the input of the first regulating means and first detection means connected between the power supply line and the diverting means, said detection means ordering short-circuiting of the input of the first regulating means when the voltage of the power supply line exceeds a first preset threshold, and
- the second chopping regulator comprises current interrupting means (18, 22, 47, 58) controlled by the control means (20), the control means ordering interruption of the current supplied by the second regulator when the first regulating means order short-circuiting of the input of the first regulating means.

5. The trip device according to any one of the claims 1 to 4, **characterized in that** the output of the second regulating means (17) is connected to the input of the first regulating means (16).

6. The trip device according to any one of the claims 1 to 4, **characterized in that** the output of the second regulating means (17) is connected to the output of the first regulating means (16).

7. The trip device according to any one of the claims 1 to 6, **characterized in that** the second power supply circuit (9) comprises a rectifier circuit (24) connected to the external electrical power source (11), a voltage limiter (25) connected to the outputs of the rectifier circuit, and a chopper (26) connected to outputs of the limiter (25) and supplying a voltage to an input of the second regulating means (17).

8. The trip device according to claim 7, **characterized in that** the chopper (26) comprises a transformer (27) comprising a primary winding (28) supplied by means of an oscillator (30) and a secondary winding (29) electrically isolated from the primary winding and connected to the input of the second regulating means (17).

9. The trip device according to claim 8, **characterized in that** the chopper (26) is of the flyback type.
